# EUROPEAN PATENT APPLICATION

(11) **EP 2 256 612 A2**
(43) Date of publication of application: **01.12.2010**
(21) Application number: 09178891.9
(22) Date of filing: 11.12.2009
(51) Int. Cl.: G06F 3/048

(54) **User interface apparatus and method for an electronic device touchscreen**

(30) Priority: 29.05.2009 US 474343
(71) Applicant: Agere System Inc., Allentown, PA 18109 (US)
(72) Inventor: Fratti, Roger A., Mohnton, PA 19540 (US)
(74) Representative: Williams, David John

(57) **Abstract**

Embodiments of the invention include a system for entering end user information into an electronic device. The system includes a display unit with a touchscreen having a plurality of locations. The touchscreen is configured to detect the presence of an end user object proximal to one of the touchscreen locations and to detect when an end user object makes contact with one of the touchscreen locations. The system also includes a controller configured to generate an audible sound indicative of the touchscreen location to which an end user object is proximal in response to the display unit detecting the presence of the end user object proximal to the touchscreen location. The controller also is configured to generate contact location information indicative of the touchscreen location with which an end user object makes contact in response to the display unit detecting the contact of the end user object on the touchscreen location.

## Description

### BACKGROUND OF THE INVENTION

### Field of the Invention

The invention relates to end user interfaces, such as end user interface for entering information into an electronic device. More particularly, the invention relates to end user interface display units having touchscreen technology for entering information into electronic devices.

### Description of the Related Art

Many portable handheld electronic devices, such as personal digital assistants (PDAs), mobile phones, navigation devices and games, include some sort of end user keypad or other user interface for entering alphanumeric information or other information into the electronic device. Some of these electronic devices have a relatively small keyboard with actual keys that are physically depressed to enter the information associated with the particular key. Many of these electronic devices instead use a simulated or virtual keyboard or other graphical user interface (GUI) touchscreen on the device's display unit, such as a liquid crystal display (LCD) touchscreen or other appropriate screen. Touchscreens are configured to detect the presence and location of an end user object making contact with the touchscreen's display area. The end user object can be the finger of an end user, or a physical object, such as an active or passive stylus.

As portable handheld electronic devices and their associated display touchscreens become even smaller in size, the ability to accurately enter alphanumeric information and other end user information into the device via its touchscreen or other end user interface can become more difficult, especially for end users that are far sighted or that have relatively large fingers or other objects compared to the size of the device touchscreen.

Therefore, a need exists for an improved end user interface touchscreen and manner in which an end user can enter end user information, such as alphanumeric information and other end user information, into an electronic device via the touchscreen.

### SUMMARY OF THE INVENTION

The invention is embodied in a system for entering end user information into an electronic device. The system includes a display unit with a touchscreen having a plurality of locations, such as alphanumeric key locations on a virtual keyboard. The touchscreen is configured to detect the presence of an end user object proximal to one of the plurality of touchscreen locations and to detect when an end user object makes contact with one of the touchscreen locations. The system also includes a controller, coupled to the display unit, that is configured to generate an audible sound indicative of the touchscreen location to which an end user object is proximal in response to the display unit detecting the presence of the end user object proximal to the touchscreen location. The controller also is configured to generate contact location information indicative of the touchscreen location with which an end user object makes contact in response to the display unit detecting the contact of the end user object on the touchscreen location. In operation, the system audibly identifies the touchscreen location that an end user object happens to be near. Based on this audible information, the end user can contact the touchscreen location with the end user object to register the entry of the associated alphanumeric character or other information into the electronic devices. However, if the touchscreen location is not the touchscreen location that the end user intends to enter into the electronic device, the end user can move the end user object appropriately to another touchscreen location. Therefore, the end user is audibly notified of the touchscreen location the end user object is about to contact before the end user object actually has to make contact with the touchscreen location.

In one aspect the invention provides a system for entering end user information into an electronic device, comprising: a display unit coupled to the electronic device, wherein the display unit includes a touchscreen having a plurality of locations, wherein the display unit is configured to detect the presence of an end user object proximal to one of the plurality of touchscreen locations, and wherein the display unit is configured to detect the contact of an end user object on one of the plurality of touchscreen ocations; and a controller coupled to the display unit, wherein the controller is configured to generate an audible sound indicative of the location of the touchscreen to which an end user object is proximal in response to the display unit detecting the presence of an end user object proximal to the touchscreen location, wherein the controller is configured to register in the electronic device contact location information indicative of the location of the touchscreen with which an end user object has made contact in response to the display unit detecting the contact of an end user object on the touchscreen location.

In another aspect the invention provides an electronic device, comprising: a display unit including a touchscreen having a plurality of locations, wherein the display unit is configured to detect the presence of an end user object proximal to one of the plurality of touchscreen locations, and wherein the display unit is configured to detect the contact of an end user object on one of the plurality of touchscreen locations; a touchscreen controller coupled to the display unit, wherein the touchscreen controller is configured to generate a first set of information indicative of the touchscreen location to which an end user object is proximal in response to the display unit detecting the presence of an end user object proximal to the touchscreen location, and wherein the touchscreen controller is configured to register in the electronic device a second set of information indicative of the touchscreen location with which an end user object has made contact in response to the display unit detecting the contact of an end user object on the touchscreen location; and a text-to-speech converter coupled to the touchscreen controller, wherein the text-to-speech converter is configured to generate, based on the first set of information generated by the touchscreen controller, an audible sound indicative of the touchscreen location to which an end user object is proximal.

The electronic device may further comprise a speaker system coupled to the text-to-speech converter, and wherein the text-to-speech converter is configured to provide a signal to the speaker that allows the speaker to generate the audible sound indicative of the touchscreen location to which an end user object is proximal.

The end user object may be selected from the group consisting of an end user finger and a stylus.

In a further aspect the invention may provide a method for entering end user information into an electronic device, wherein the electronic device includes a display unit having a touchscreen with a plurality of locations and a controller coupled to the display unit, comprising: detecting the presence of an end user object proximal to one of the plurality of locations of the touchscreen; generating, in response to detecting the presence of an end user object proximal to one of the touchscreen locations, an audible sound indicative of the touchscreen location to which the end user object is proximal; detecting the contact of an end user object to one of the plurality of locations of the touchscreen; and registering, in response to detecting the contact of an end user object to one of the touchscreen locations, location information indicative of the location of the touchscreen to which the end user object has made contact.

If an end user object is proximal to one of the touchscreen locations for greater than a first period of time, the method may further comprise registering location information for the touchscreen location to which the end user object is proximal as if the end user object had made contact with the touchscreen location.

At least a portion of the touchscreen locations may each represent a unique alphanumeric character of a virtual keyboard, and wherein the end user object is selected from the group consisting of an end user finger and a stylus.

### BRIEF DESCRIPTION OF THE DRAWINGS

Fig. 1 is a block diagram illustrating a system for entering end user information into an electronic device according to embodiments of the invention;

Fig. 2 is a block diagram illustrating an electronic device that includes a system for entering end user information in the electronic device according to embodiments of the invention; and

Fig. 3 is a block diagram illustrating a method for entering information into an electronic device according to embodiments of the invention.

### DETAILED DESCRIPTION OF EXEMPLARY EMBODIMENTS

In the following description, like reference numerals indicate like components to enhance the understanding of the invention through the description of the drawings. Also, although specific features, configurations and arrangements are discussed hereinbelow, it should be understood that such is done for illustrative purposes only. A person skilled in the relevant art will recognize that other steps, configurations and arrangements are useful without departing from the spirit and scope of the invention.

Embodiments of the invention are directed to providing an improved user interface for entering alphanumeric information or other information into an electronic device via the device's display unit touchscreen. Embodiments of the invention use a touchscreen controller coupled to the electronic device's display unit to receive and process information from the display unit touchscreen. The information received and processed by the touchscreen controller is related to the presence and location of an end user object that is near or proximal to the touchscreen. For example, the display unit detects the presence and location of an object, such as an end user's finger or a stylus, that is near or proximal to the touchscreen. The touchscreen controller performs appropriate noise filtering, such as digital mean filtering, and other processes to appropriately identify the touchscreen location where the end user object is near, and provides such information to a text-to-speech converter coupled to the touchscreen controller. The text-to-speech converter, which can be coupled to an appropriate sound device, such as a speaker, produces an audible signal or sound indicative of the location of the touchscreen to which the end user object is near. For example, for a touchscreen having a simulated or virtual keyboard, the audible sound identifies the alphanumeric character associated with touchscreen location to which the end user object is near. Based on this audible information, the end user can contact the touchscreen location with the end user object to register the entry of the associated alphanumeric character or other information into the electronic device. However, if the associated alphanumeric character or other information is not what the end user intends to enter into the electronic device, the end user can move the end user object appropriately to another touchscreen location, e.g., the location associated with the alphanumeric character the end user does intend to enter or register in the electronic device. In this manner, the end user is audibly notified of the touchscreen location the end user object is about to contact before the end user actually contacts the touchscreen location with the end user object to enter or register the associated information into the electronic device.

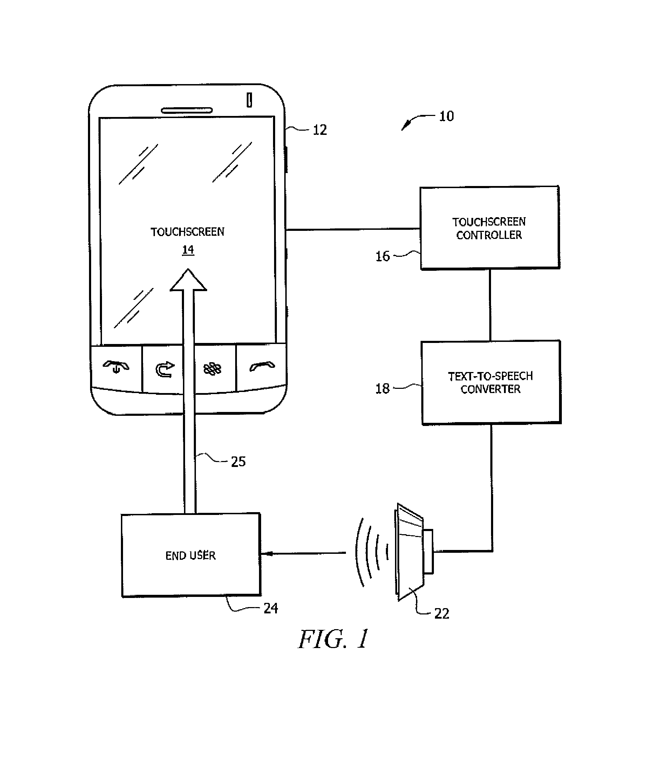

Referring now to FIG. 1, shown is a block diagram illustrating a system 10 for entering end user information into an electronic device according to embodiments of the invention. The system 10 includes a display unit 12 having a touchscreen 14, a touchscreen controller 16 coupled to the display unit 12 and the touchscreen 14, and a text-to-speech converter 18 coupled to the touchscreen controller 16. The text-to-speech converter 18 can include or be coupled to a speaker 22 or other suitable audible sound system or device configured to provide an audible sound to an end user 24, as will be discussed in greater detail hereinbelow. The end user 24 can have or use an end user object 25, such as the end user's finger or a stylus, to make contact with a desired location of the touchscreen to enter or register information associated with the touchscreen location into the electronic device 30.

The system 10 is applicable for use with and can be part of an electronic device, which can be any suitable communication device that has a touchscreen, including portable or handheld electronic devices. For example, the electronic device can be a personal digital assistant (PDAs), a smart handheld device, a mobile phone, a navigation device, a touch screen monitor, or a point-of-sale terminal, including an electronic kiosk. Also, the electronic device can be a cellular telephone, a smart telephone (smartphone), a digital music player (e.g., MP3 player), a portable video player, a portable media player (PMP), a media player in an automobile, a laptop personal computer (PC), a notebook PC or other mobile computing device.

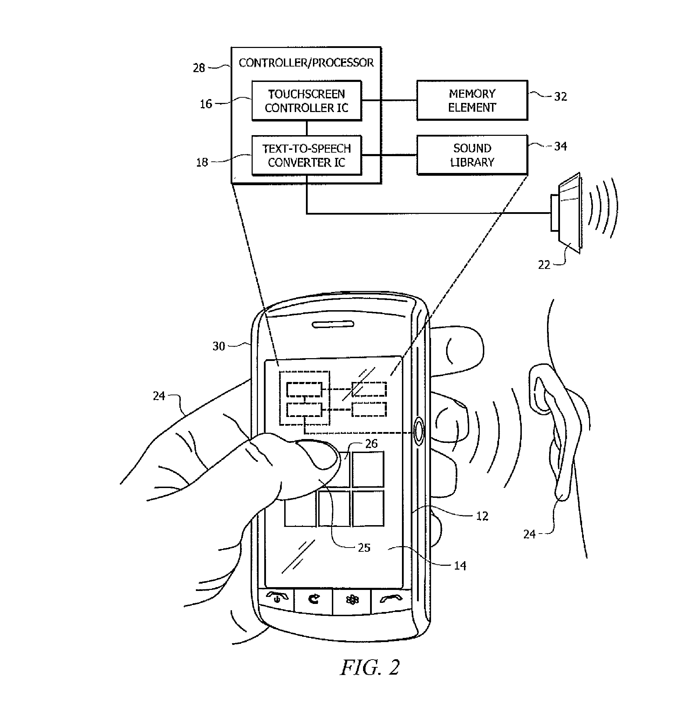

Referring now to FIG. 2, shown is a block diagram illustrating an electronic device 30 that includes a system for entering end user information according to embodiments of the invention. The electronic device 30 includes the display unit 12 that has the touchscreen 14. The touchscreen 14, which can be a liquid crystal display (LCD) touchscreen or other appropriate touchscreen, typically includes a simulated or virtual keyboard portion 26, or other suitable graphical user interface (GUI), for allowing an end user 24 to enter alphanumerical characters and/or other end user information into the electronic device 30 using an object, such as an end user finger or a stylus.

The touchscreen 14 can use any one of a number of available technologies to determine the presence and location of an end user object making contact with the touchscreen and to generate suitable information indicative of the location of the touchscreen that has been contacted by the object. Therefore, the touchscreen 14 has the ability to measure pressure applied to the touchscreen on the z-axis, as well as to determine the x-axis and y-axis coordinates (i.e., coordinate pair) of the applied pressure. For example, the touchscreen 14 can make use of resistive, capacitive, surface acoustic wave (SAW), infrared technology or other suitable technology to detect when and where an end user object touches the touchscreen 14.

Also, according to embodiments of the invention, the touchscreen 14 is configured to detect when and where an end user object comes near the touchscreen 14, i.e., within a given distance, even if the end user object does not actually make contact with the touchscreen 14. For example, for a touchscreen that measures capacitance between an end user object and the touchscreen, the capacitance varies as a function of the distance between the end user object and the touchscreen. Therefore, with the appropriate sensitivity of the touchscreen measurement system, the touchscreen can detect that an end user object is near or proximal to the touchscreen when the measured capacitance enters a first range of capacitance, and that an end user object has made contact with the touchscreen when the measured capacitance enters a second range of capacitance. Thus, in addition to measuring the capacitance (or pressure) resulting from an end user object physically contacting the touchscreen 14, the touchscreen 14 is configured with the ability to determine if an object is near or proximal to the touchscreen 14 without the end user object actually contacting the touchscreen 14, and the particular location of the touchscreen 14 to which the end user object is near or proximal.

The touchscreen 14 also is configured to generate appropriate signals or location information indicative of the location of the touchscreen 14 where an end user is near or where an end user has contacted the touchscreen. More specifically, the touchscreen 14 is configured to generate a first set of appropriate information, e.g., in analog form, in response to an end user object being near or in close proximity to the touchscreen 14. Also, the touchscreen 14 is configured to generate a second set of appropriate information, in response to an end user object coming into contact with the touchscreen 14. Both the first and second sets of information are sent to or can be accessed by the touchscreen controller 16. It should be understood that the information supplied to the touchscreen controller 16 when an object is near or proximal to the touchscreen 14 is different and distinguishable from the information supplied to the touchscreen controller 16 when an object makes contact with the touchscreen 14.

The information generated by the touchscreen 14 typically is in analog form. However, the touchscreen 14 can include or be coupled to an analog-to-digital (A/D) converter that converts the information into digital form, which is suitable for use by the touchscreen controller 16. Alternatively, the touchscreen controller 16 or other appropriate portion of the controller 28 can include or be coupled to the appropriate analog-to-digital conversion component(s).

The electronic device 30 includes a general purpose (host) controller or processor 28 that, in general, processes all information received by the electronic device 30. The processor 28 generally processes instructions, data and other information received by the electronic device 30 from the display unit 12 and other sources (not shown) that may be coupled to the electronic device 30, e.g., wirelessly or via a wired connection. The processor 28 also manages the movement of various instructions, data and other information to and from other components within the electronic device 30.

The touchscreen controller 16 is coupled to the touchscreen 14 and can be included as part of the processor 28, as shown, or, alternatively, can be a stand alone controller IC (integrated circuit) coupled to the processor 28. The touchscreen controller 16 is configured to receive appropriate signals and information generated by the touchscreen 14 portion of the display unit 12 and to perform appropriate noise filtering and processing of such information to determine the touchscreen location that an end user object is near or that has been contacted by an end user object. For example, according to embodiments of the invention, the touchscreen controller 16 can make use of a digital mean filtering process or other appropriate noise filtering process to assist in the determination of a touchscreen location to which an end user object is near or a touchscreen location that has been contacted by an end user object. Also, the touchscreen controller 16 can process various information received from the touchscreen 14 and provide the processed information to the text-to-speech converter 18 for further processing, e.g., processed information related to the location of the touchscreen 14 to which an end user object is near. The touchscreen controller 16 also can process various information received from the touchscreen 14 and store the processed information in the memory element 32. The operation of the touchscreen controller 16 will be discussed in greater detail hereinbelow.

The text-to-speech converter 18, which is coupled to the touchscreen controller 16, can be included as part of the processor 28, as shown, or, alternatively, can be a stand alone controller IC coupled to the processor 28. Also, it should be understood that the touchscreen controller 16 and the text-to-speech converter 18 can be a single component, e.g., a single controller IC. The text-to-speech converter 18 is configured to receive information from the touchscreen controller 16 and to process such information to generate appropriate audible sounds, or sound signals or information for the speaker 22 to generate appropriate audible sounds. The text-to-speech converter 18 also is configured to retrieve (and store, if necessary) appropriate sounds and/or signals from the sound library 34 as may be needed to provide or have the speaker 22 provide appropriate audible sounds to the end user. The operation of the text-to-speech converter 18 will be discussed in greater detail hereinbelow.

The electronic device 30 also can include a memory or storage element 32, coupled to the processor 28 and/or the touchscreen controller 16, for storing information received by the electronic device 30 and other information, as needed. In addition to the memory element 32, the electronic device 30 can include at least one type of memory or memory unit (not shown) within the processor 28, and/or a storage unit or data storage unit coupled to the controller 28 for storing processing instructions and/or information received and/or created by the electronic device 30. Also, a portion of one or more memory elements may function as a keystroke storage unit allocated for storing keystrokes entered by the end user as a result of contacting the appropriate touchscreen location associated with such keystroke.

The electronic device 10 also can include a (sound) library data storage unit 34 coupled to the text-to-speech converter 18. The sound library 34 is configured to generate and/or store or maintain various audible sounds, or signals that can be translated to audible sounds, that each are associated with a different location of the touchscreen 14. For example, for a touchscreen 14 with a keyboard portion 26, the sound library 34 generates or has stored therein an audible sound for each of the alphanumeric characters represented by the keyboard portion of the touchscreen 14.

The electronic device 30 is illustrated as an integrated device including all necessary components in one unit. However, the electronic device 30 can be implemented as a device system including a plurality of component units functionally connected to each other. For example, the display unit 12, the speaker 22 and at least a portion of the memory unit 32 can be implemented as separate units that are coupled to the rest of the electronic device 30 either by wired connection or wirelessly, e.g., via a Bluetooth connection. Also, although the touchscreen controller 16 and the text-to-speech converter 18 are shown within or as part of the general purpose processor or controller 28, it should be understood that all or a portion of one or both of the touchscreen controller 16 and the text-to-speech converter 18 can be coupled to the general purpose processor 28.

One or more of the controller 28, the touchscreen controller 16, the text-to-speech converter 18, the memory element 32, the library 34, at least a portion of the display unit 12, and the speaker 22 can be comprised partially or completely of any suitable structure or arrangement, e.g., one or more integrated circuits. Also, it should be understood that the electronic device 30 includes other components, hardware and software (not shown) that are used for the operation of other features and functions of the electronic device 30 not specifically described herein.

The electronic device 30 can be partially or completely configured in the form of hardware circuitry and/or other hardware components within a larger device or group of components. Alternatively, at least a portion of the electronic device 30 can be configured in the form of software, e.g., as processing instructions and/or one or more sets of logic or computer code. In such configuration, the logic or processing instructions typically are stored in a data storage device, e.g., the memory element 32 or other suitable data storage device (not shown). The data storage device typically is coupled to a processor or controller, e.g., the controller 28. The controller accesses the necessary instructions from the data storage element and executes the instructions or transfers the instructions to the appropriate location within the electronic device 30.

In operation, according to embodiments of the invention, the touchscreen 14 portion of the display unit 12 of the electronic device 30 detects the presence of an end user object, such as the end user's finger or a stylus, coming near or proximal to the touchscreen 14. The touchscreen 14 also detects the particular location of the touchscreen 14 to which the end user object is approaching. When the end user object comes within a certain distance of the touchscreen location, in response thereto, the touchscreen 14 generates an appropriate signal or set of information indicative of the touchscreen location to which the object is near or approaching. Such information is provided to the touchscreen controller 16, which processes the information to determine the particular touchscreen location as well as the corresponding alphanumeric character or other indicia indicative of the touchscreen location to which the end user object is near. The touchscreen controller 16 then provides such information to the text-to-speech converter 18, which either produces a digital audible sound indicative of the determined touchscreen location that the end user object is about to touch, or provides appropriate signal information to the speaker 22 or other device to produce an audible sound associated with the determined touchscreen location that the end user object is about to touch.

Based on the audible sound provided by the electronic device 30, the end user will know if the end user object is about to touch the specific touchscreen location desired by the end user. If the audible sound indicates a touchscreen location that the end user does not want to touch, the end user can shift or otherwise reposition the end user object to another potential touchscreen location. Such process can continue until the end user has positioned the end user object near the specific touchscreen location the end user desires, e.g., the touchscreen location corresponding to a specific alphanumeric character. When the end user has positioned the end user object directly over and sufficiently close to the desired touchscreen location, the end user then can contact the desired touchscreen location with the end user object to enter or register the corresponding alphanumeric character or other location indicia into the electronic device 30. Alternatively, according to embodiments of the invention, the end user can have the end user object remain positioned over the desired touchscreen location for a given period of time, e.g., a few seconds, or move the end user object closer to the touchscreen within a given distance of the desired touchscreen location, and the electronic device 30, via the touchscreen controller 16, will automatically register the corresponding alphanumeric character or other location indicia, as if the end user object had made contact with the desired touchscreen location.

The touchscreen controller 16 then registers the appropriate information (i.e., the alphanumeric character or other indicia) related to the contacted touchscreen location into the electronic device 30 in an appropriate manner, e.g., by storing the information in the memory element 32. The entering or registration of the contacted touchscreen location information can be confirmed or verified by an appropriate audible sound, e.g., a click, which can be generated by the speaker 22 or other appropriate component in response to an appropriate signal transmitted from the controller 28, e.g., the touchscreen controller 16 portion of the controller 28.

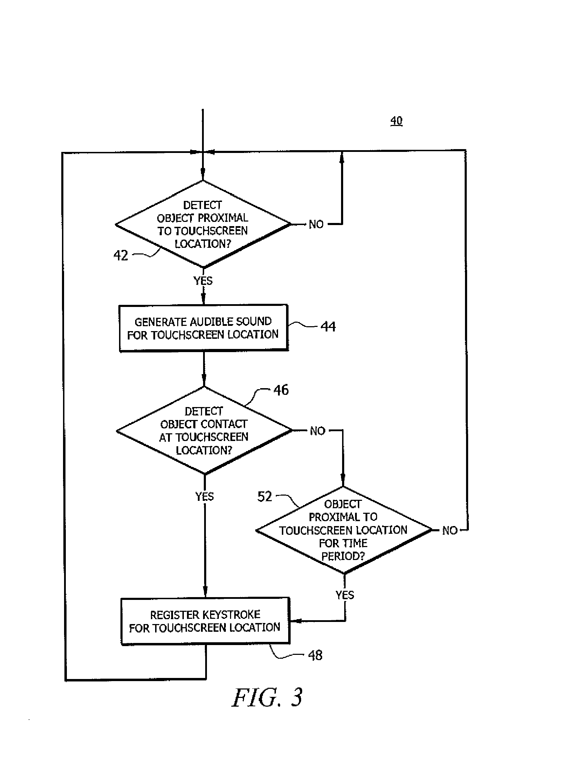

Referring now to FIG. 3, with continuing reference to FIG. 2, shown is a flow chart that schematically illustrates a method 40 for entering information into an electronic device according to embodiments of the invention. The method 40 includes a step 42 of detecting whether or not an end user object is near or proximal to a portion of the touchscreen 14, e.g., whether or not an end user's finger is approaching a particular key on a simulated keyboard 26 on the touchscreen 14. If there is no detection of an object near the touchscreen 14 (N), the method 40 continues to monitor the touchscreen 14 for any indication of an end user object approaching the touchscreen 14.

If the method 40 detects that an end user object approaching the touchscreen 14 is sufficiently near or proximal to the touchscreen 14 (Y), the method 40 performs a step 44 of generating an audible sound that corresponds to or otherwise is indicative of the particular location of the touchscreen 14 to which the end user object is near or proximal. As discussed hereinabove, once an end user object is within a given distance of a touchscreen location, the touchscreen controller 16 receives appropriate information from the display unit 12 and/or the touchscreen 14 and performs necessary processing to determine the particular touchscreen location where the end user object is near. The processed information then is provided to the text-to-speech converter 18, which, based on the processed information, generates or has generated an appropriate audible sound indicative of the alphanumeric character or other indicia associated with the touchscreen location to which the end user object is near.

The method 40 also includes a step 46 of detecting whether or not an end user object has made contact with a location of the touchscreen 14. As discussed hereinabove, the touchscreen 14 is configured to detect the presence and location of an end user object making contact with the touchscreen and also to generate appropriate contact location information indicative of the contacted touchscreen location. If the method 40 detects that an end user object has made contact with the touchscreen 14 (Y), the method 40 performs a step 48 of registering within the electronic device 30 the specific location of the touchscreen 14 that was contacted by the object. For example, when an end user object contacts the touchscreen 14, the touchscreen controller 16 identifies the specific location of the touchscreen, generates appropriate information indicative of such location, and stores such information, e.g., in the memory element 32. The touchscreen controller 16 also can send an appropriate signal or information to the text-to-speech converter 18 or other appropriate portion of the controller 28 to have a click or other appropriate audible sound generated to confirm that the touchscreen 14 has been contacted and that contact location information has been entered or registered into the electronic device 30.

If the method 40 does not detect that an end user object has made contact with the touchscreen 14 (N), i.e., while the end user object still is near or proximal to the touchscreen 14, the method performs a step 52 of determining whether the end user object has been near or proximal to the same touchscreen location for a given period of time. If the end user object that had been detected near or proximal to a particular touchscreen location, via the detection step 42, did not remain near or proximal to the same touchscreen location for a given period of time (N), the method 40 returns control to the initial detection step 42. However, if the end user object that had been detected near or proximal to a particular touchscreen location, via the detection step 42, remains near or proximal to the same touchscreen location for a given period of time (Y), the method 40 passes control to the step 48 of registering within the electronic device 30 the location of the touchscreen 14 that the end user object is near. That is, as discussed hereinabove, if an end user object remains near or proximal to a specific touchscreen location for a certain amount of time, information related to the touchscreen location automatically is entered into the electronic device 30 as if that specific touchscreen location had been contacted by the end user object.. It should be understood that, according to embodiments of the invention, the electronic device 30 can be configured in such a way that this particular automatic entry feature can be disable if desired. Once the touchscreen location is entered into the electronic device 30, the method 40 then returns control to the initial detection step 42.

According to embodiments of the invention, the touchscreen controller 16 and/or other appropriate component or components within the electronic device 30 can use a delta algorithm or other suitable algorithms to improve the efficiency of the processing involved in determining the touchscreen location approached or contacted by the end user object. A delta algorithm or delta filter algorithm can be part of a filtering process that is used to remove large variations in sampled values due to noise and glitches. The delta filter algorithm also can be used to help predict where the end user object is likely to be repositioned if the end user object approaches but does not contact an initially-detected touchscreen location. Such prediction is done by taking the two previous touchscreen location coordinates and subtracting one from the other, producing a delta value. This delta value is then added or subtracted to the last touchscreen location coordinate. The resulting value is the predicted touchscreen location coordinate. If the new sampled touchscreen location coordinate is close to this predicted value, then the new value is accepted as valid. If the new sampled coordinate is not close to the predicted coordinate, then the value is not used, but is stored for use in the following delta calculations. Such an algorithm is useful in helping to determine the desired end user touchscreen contact location.

For example, if an end user is using an end user object to attempt to contact a desired touchscreen location, but does not have the end user object positioned over the desired touchscreen location, the end user likely has the end user object in a touchscreen location that is relatively near the desired touchscreen location. Therefore, rather than compute the touchscreen location information for each incorrect touchscreen location and then finally computing the location information of the end user's correct (desired) touchscreen location, the delta algorithm can assist in predicting the desired touchscreen location based on the initial incorrect touchscreen location, because the desired touchscreen location typically is relatively near the initial incorrect touchscreen location. In this manner, processing will be more efficient and the audible sounds of the incorrect locations can be generated much more quickly for the benefit of the end user in locating the desired touchscreen location, as well as the registration of the desired touchscreen location by the electronic device 30.

It will be apparent to those skilled in the art that many changes and substitutions can be made to the embodiments of the invention herein described without departing from the spirit and scope of the invention as defined by the appended claims and their full scope of equivalents.

## Claims

1. A system for entering end user information into an electronic device, comprising:
a display unit coupled to the electronic device, wherein the display unit includes a touchscreen having a plurality of locations, wherein the display unit is configured to detect the presence of an end user object proximal to one of the plurality of touchscreen locations, and wherein the display unit is configured to detect the contact of an end user object on one of the plurality of touchscreen locations; and
a controller coupled to the display unit, wherein the controller is configured to generate an audible sound indicative of the location of the touchscreen to which an end user object is proximal in response to the display unit detecting the presence of an end user object proximal to the touchscreen location,
wherein the controller is configured to register in the electronic device contact location information indicative of the location of the touchscreen with which an end user object has made contact in response to the display unit detecting the contact of an end user object on the touchscreen location.

2. The system as recited in claim 1, wherein, if an end user object is proximal to one of the touchscreen locations for greater than a first period of time, the controller is configured to register contact location information for the touchscreen location as if the end user object had made contact with the touchscreen location.

3. The system as recited in claim 1, wherein the controller is configured to generate one of a plurality of sounds each associated with a different one of the plurality of touchscreen locations in response to the display unit detecting the presence of an end user object proximal to the corresponding touchscreen location.

4. The system as recited in claim 3, wherein the controller includes a library data storage unit for storing at least a portion of the plurality of sounds each associated with a different one of the plurality of touchscreen locations, and wherein the controller is configured to retrieve at least one of the stored plurality of sounds based on the location of the touchscreen to which an end user object is detected as being proximal.

5. The system as recited in claim 1, wherein the controller includes a touchscreen controller coupled to the display unit, wherein the touchscreen controller is configured to register the touchscreen location with which an end user object has made contact in response to the display unit detecting the contact of the end user object at the touchscreen location, and wherein the controller is configured to generate a first set of information indicative of the touchscreen location to which an end user object is proximal in response to the display unit detecting the presence of the end user object being proximal to the touchscreen location.

6. The system as recited in claim 1, wherein the controller is configured to generate a first set of information indicative of the touchscreen location to which an end user object is proximal in response to the display unit detecting the presence of the end user object being proximal to the touchscreen location, and wherein the controller includes a text-to-speech converter configured to generate the audible sound indicative of the touchscreen location to which an end user object is proximal based on the first set of information.

7. The system as recited in claim 1, wherein the touchscreen includes a virtual keyboard, and wherein at least a portion of the touchscreen locations each represent a unique alphanumeric character on the virtual keyboard.

8. The system as recited in claim 1, wherein the end user object is selected from the group consisting of an end user finger and a stylus.

9. An electronic device, comprising:
a display unit including a touchscreen having a plurality of locations, wherein the display unit is configured to detect the presence of an end user object proximal to one of the plurality of touchscreen locations, and wherein the display unit is configured to detect the contact of an end user object on one of the plurality of touchscreen locations;
a touchscreen controller coupled to the display unit, wherein the touchscreen controller is configured to generate a first set of information indicative of the touchscreen location to which an end user object is proximal in response to the display unit detecting the presence of an end user object proximal to the touchscreen location, and wherein the touchscreen controller is configured to register in the electronic device a second set of information indicative of the touchscreen location with which an end user object has made contact in response to the display unit detecting the contact of an end user object on the touchscreen location; and
a text-to-speech converter coupled to the touchscreen controller, wherein the text-to-speech converter is configured to generate, based on the first set of information generated by the touchscreen controller, an audible sound indicative of the touchscreen location to which an end user object is proximal.

10. The electronic device as recited in claim 9, wherein, if an end user object is proximal to one of the touchscreen locations for greater than a first period of time, the touchscreen controller is configured to register in the electronic device the first set of information as if the end user object had made contact with the touchscreen location.

11. The electronic device as recited in claim 9, wherein the display unit is configured to measure the capacitance between the end user object and the touchscreen, and wherein the touchscreen controller is configured to generate the first set of information indicative of the touchscreen location to which an end user object is proximal in response to the display unit measuring capacitance between the end user object and the touchscreen within a first capacitance range and to generate the second set of information indicative of the touchscreen location with which an end user object has made contact in response to the display unit measuring capacitance between the end user object and the touchscreen within a second capacitance range.

12. The electronic device as recited in claim 9, wherein the text-to-speech converter is configured to generate one of a plurality of sounds each associated with a different one of the touchscreen locations based on the first set of information generated by the touchscreen controller.

13. The electronic device as recited in claim 12, wherein the text-to-speech converter includes a library data storage unit for storing at least a portion of the plurality of sounds each associated with a different one of the touchscreen locations, and wherein the text-to-speech converter is configured to retrieve at least one of the stored plurality of sounds based on the first set of information generated by the touchscreen controller.

14. The electronic device as recited in claim 9, wherein the touchscreen includes a simulated keyboard, and wherein at least a portion of the plurality of touchscreen locations each represent a unique alphanumeric character on the simulated keyboard.

15. The electronic device as recited in claim 9, wherein each of the plurality of touchscreen locations has associated therewith a unique audio sound.
